# EUROPÄISCHE PATENTSCHRIFT

(11) **EP 3 725 262 B1**
(45) Veröffentlichungstag und Bekanntmachung des Hinweises auf die Patenterteilung: **02.11.2022**
(21) Anmeldenummer: 19170112.7
(22) Anmeldetag: 18.04.2019
(51) Int. Cl.: A61C 13/20

(54) **DENTALES AUSBETTVERFAHREN SOWIE MUFFEL**
DENTAL DEFLASKING METHOD AND CASTING MOULD
PROCÉDÉ DE DÉMOUFLAGE DENTAIRE AINSI QUE MOULE

(43) Veröffentlichungstag der Anmeldung: 21.10.2020
(73) Patentinhaber: Ivoclar Vivadent AG, 9494 Schaan (LI)
(72) Erfinder: Tubic, Aleksandar, 1200 Wien (AT); Schlegel, Manuel, 8887 Mels (CH); Jussel, Rudolf, 6800 Feldkirch (AT)
(74) Vertreter: Baronetzky, Klaus

(56) Entgegenhaltungen:
- DE-U1- 9 001 740
- US-A- 6 013 125
- US-A1- 2009 155 736
- US-A1- 2012 121 752
- US-A1- 2018 194 039

## Beschreibung

Die Erfindung betrifft ein dentales Ausbettverfahren, gemäß dem Oberbegriff von Anspruch 1, sowie eine dentale Muffel, gemäß dem Oberbegriff von Anspruch 9.

Für die Herstellung von insbesondere keramischen Dentalrestaurationsteilen werden in sehr großen Umfang Muffeln verwendet. Diese bestehen aus einer Vergussmasse, beispielsweise Gips, und werden nach dem Abschluss des Pressvorgangs und des Brennzyklus in dem Pressofen - auch Muffelofen genannt - aus dem Ofen entfernt.

In diesem Zustand ist die Muffel noch recht heiß, beispielsweise 900° C, und es geht darum, dass in die Muffel eingebettete Dentalrestaurationsteil oder die Mehrzahl von Dentalrestaurationsteilen auszubetten.

Typischerweise wird hierzu die Muffel zunächst zunehmend abgekühlt, bis sie bearbeitet werden kann. Die Bearbeitung erfolgt dann mittels Trennschleifern oder auch mittels Sandstrahlen, wobei gerade bei großen Muffeln wie solchen mit 300 g ein erheblicher Werkzeugverbrauch oder auch ein hoher Sandverbrauch entsteht.

Zudem brauchen gerade große Muffeln recht lange, bis sie auf eine Bearbeitungstemperatur abgekühlt sind.

Zwar hat man Versuche unternommen, mittels Trennschleifern, die besonders temperaturfest sind, die Muffeln auch schon in recht warmen Zustand zu bearbeiten.

Zum einem sind derartige Werkzeuge jedoch wesentlich teurer, und zum anderen ist der Verschleiß deutlich höher. Insgesamt ist bislang für ein erfolgreiches Ausbetten ein erhebliches Maß an manueller und zeitintensiver Bearbeitung erforderlich.

Um wenigstens die manuelle Bearbeitung zu reduzieren, ist es bereits vorgeschlagen worden, das Sandstrahlen in einem geschlossenem Gehäuse vorzunehmen und im gewissem Grade zu automatisieren.

Ein derartiges Sandstrahlgerät ist jedoch vergleichsweise teuer in der Anschaffung, unifunktional und muss regelmäßig gereinigt werden. Zudem ist der Verbrauch von dem recht teuren Sandstrahlmaterial hier höher als beim manuellen Sandstrahlen.

Insofern ist es nicht verwunderlich, dass sich derartige geschlossene Lösungen nicht durchgesetzt haben.

Andererseits ist es wichtig, dass beim Ausbetten die Glaskeramik oder das sonstige Dentalrestaurationsteil nicht beschädigt wird.

Hierzu ist es bekannt geworden, zunächst mit Grobsand vorzustrahlen und dann mit Feinsand nachzustrahlen. Auch hier muss der Bearbeiter vorsorglich einen Sicherheitsabstand zum Dentalrestaurationsteil einhalten.

Es ist nicht in allen Fällen gewährleistet, dass der Bearbeiter Kenntnis von der genauen Lage der Dentalrestaurationsteile innerhalb der Muffel hat, nachdem diese nicht sichtbar sind.

Dokument US6013125 A offenbart eine dentale Muffel mit einem Dentalrestaurationsteil, das in Vergussmasse eingebettet ist, wobei die Vergussmasse mehrere Sollbruchstellen aufweist, die durch entfernte Teilchen aus Zucker ausgebildet sind, die in der Vergussmasse vermischt waren. Es ist weiterhin aus DE 90 01 740 U1 bekannt, das Wachsmodell unmittelbar auf einen Formansatz, der einstückig mit einem Stirnwandteil der Muffel ausgestaltet ist, aufzuwachsen.

Daher liegt der Erfindung die Aufgabe zugrunde, ein dentales Ausbettverfahren gemäß dem Oberbegriff von Anspruch 1 sowie eine dentale Muffel gemäß dem Oberbegriff von Anspruch 9 zu schaffen, die hinsichtlich der Prozesszeit und-effizienz, aber auch hinsichtlich der Kosten, deutlich verbessert ist.

Diese Aufgabe wird erfindungsgemäß durch Anspruch 1, beziehungsweise 9, gelöst. Vorteilhafte Weiterbildungen ergeben sich aus den Unteransprüchen.

Erfindungsgemäß ist es vorgesehen, dass die üblicherweise außen rein zylindrische Muffel mindestens an ihrer Mantelfläche unterbrochen ist. Hierzu sind an der Gießform für die Muffel, die natürlich ebenfalls zylindrisch ist, Formteile oder Vorsprünge realisiert, die die Mantelfläche unterbrechen. Die Formteile oder Vorsprünge sind an der Gießform abgestützt und bestehen in einer ersten Ausführungsform aus einem entfernbaren Material.

In einer zweiten Ausführungsform bestehen sie aus einem wärmefesten Material, das von dem Material der Vergussmasse verschieden ist. Besonders geeignet ist ein Formteil-Material, das zum Material der Vergussmasse dispers ist. Z.B. besteht das Material aus aus Stahl oder einem anderen Metall, einer Keramik wie ZrO₂ oderAl₂O₃.

Das Material soll eine glatte Oberfläche haben. Die Oberflächenrauhigkeit Rₐ beträgt weniger als 5 µm und insbesondere weniger als 1 µm.

Die erfindungsgemäße Bearbeitung erfolgt im Rahmen eines gegenüber dem an sich bekannten etwas modifizierten Pressprozess, der hier - und zusätzlich mit Bezug auf die Erfindung - erläutert wird.

Zunächst wird ein Dentalrestaurationsteil - sei es Analogtechnik - sei es beispielsweise unter Verwendung digitaler Hilfsmittel -, aus einem ausbrennbaren Material wie Wachs geformt.

Anstelledessen können auch mehrere Dentalrestaurationsteile in der gewünschten Form hergestellt werden. Jedes dieser Teile wird nun mit einem sogenannten Anstiftkanal, einer kurzen Wachsstange, mit einer gemeinsamen Basis verbunden, und zwar so, dass die Teile voneinander einen gewissen Minimalabstand von beispielsweise 5mm oder 1cm einhalten.

Die Wachsbasis wird nun auf einen Muffeldorn mit einer Muffelbasis aufgesetzt, und auf die Muffelbasis oder an dem Muffeldorn wird nun ein Formteil angebracht, das sich bis nach außen zur Muffel-Mantelfläche erstreckt. Das Formteil weist Durchbrechungen auf und erstreckt sich jedenfalls unterhalb der Dentalrestaurationsteile.

Der Muffelring wird nun auf die Muffelbasis aufgesetzt, wobei er unten gegen den Muffelfuß abgedichtet ist. Der Muffeldeckel weist in bevorzugter Realisierung der Erfindung ebenfalls ein Formteil auf, das knapp oberhalb der Dentalrestaurationen endet und ebenfalls durchlässig für die Einbettmasse ist.

Die Einbettmasse, also beispielsweise Gips, wird nun über eine Füllöffnung im Muffeldeckel eingebracht, so dass der Innenraum des Muffelrings vollständig mit Einbettmasse gefüllt ist.

Wenn der Muffeldeckel keine Füllöffnung aufweist, kann er auch im Nachhinein, also nach dem Gießen der Muffel, aber bevor die Einbettmasse erhärtet ist, aufgebracht werden.

In an sich bekannter Weise härtet nun die Einbettmasse aus. Nach dem Aushärten wird der Muffelfuß zusammen mit dem Muffeldorn abgezogen. Der Muffelfuß besteht aus einer elastischen Masse, wie beispielsweise Silikon. Durch das Ausziehen reist die Verbindung zu den Anstiftkanälen und/oder der dort vorgesehenen Anstiftkanalbasis ab.

Ferner wird auch der Muffelring und der Muffeldeckel entfernt, diese bestehen ebenfalls aus einem Material, das sich in an sich bekannter Weise von der nunmehr erhärteten Einbettmasse ablösen lässt.

Die ausgehärtete Einbettmasse, die die Formteile und die Dentalrestaurationsteile aus Wachs umfasst, wird nun erhitzt, beispielsweise in einem Vorwärmofen oder einem Wasserbad, so dass sämtliche Wachsteile ausschmelzen und über die nach außen freilegenden Öffnungen herausfließen.

Bei der ersten Ausführungsform liegen an der Stelle, an der die Formteile und aus Wachs vorgefertigten Dentalrestaurationsteile vorhanden waren, nun Hohlräume vor.

Bei der zweiten Ausführungsform bestehen je Grenzflächen zwischen dem Formteil und der Vergussmasse. Da die Materialien dispers sind, entsteht auch bei Erwärmung kein Materialübergangsbereich. Die insofern harte Grenzfläche bietet keine Verbindung der Materialien über die Grenzfläche hinweg. Es besteht kein Zusammenhalt. Dadurch wird dort je eine Sollbruchstelle bereitgestellt.

In dem Zustand, in dem die Einbettmasse nunmehr vorliegt, wird sie auf den Kopf gestellt, so, dass die Muffelfußseite oben ist. Die Stelle, die ursprünglich der Muffeldorn eingenommen hat, ist nun ein Hohlzylinder und von oben frei zugänglich.

Dort wird ein passender und aus Dentalrestaurationsmaterial bestehender Rohling eingelegt. Die Füllöffnung wird mit einem Al₂O₃-Kolben verschlossen, und die Muffel, also die Einbettmasse mit den Hohlräumen, wird nun in einen Vorwärmofen und danach in einen Pressofen eingebracht.

Im Vorwärmofen wird sie etwa auf 700 oder 900° C erwärmt, und in dem Pressofen weiter aufgeheizt. Der Rohling kann beispielsweise aus Lithiumdisilikat bestehen. Dieses ist bei der Vorwärmtemperatur noch fest.

Es wird nun in an sich bekannter Weise über den Pressstempel des Pressofen Druck auf den Al₂O₃-Kolben ausgeübt, und damit auf den Rohling, der nun als Pressling bezeichnet werden kann.

Der Pressling wird durch die Heizung des Pressofens weiter erwärmt, und sobald er fließfähig wird, dringt sein Material über die Anstiftkanäle in die Formhohlräume, die in denen die Dentalrestaurationsteile ausgebildet werden sollen, ein.

Nachdem der Presszyklus abgeschlossen ist, wird der Pressstempel des Pressofens zurückgezogen und die Muffel wird aus dem Pressofen entnommen und kühlt in der Umgebungsluft ab.

Nachdem die Muffel zunächst recht heiß ist, beispielsweise wiederum 900° C, erfolgt die Abkühlung zunächst recht rasch.

An der Stelle, an der die Formteile realisiert sind, sind bei der ersten Ausführungsform Hohlräume beziehungsweise Spalten verblieben, bei der zweiten die Formteile bzw. Vorsrünge mit ihren trennbaren Grenzflächen.

Sobald die Erstabkühlung vollzogen ist und die Abkühlung langsamer geworden ist, wird nun ein wärmebeständiges Zerteilwerkzeug eingesetzt. Die oberen und unteren Teile der Einbettmasse werden hierdurch vom Mittelteil abgesprengt. Es verbleibt der Mittelteil, der etwa die halbe Höhe der gesamten Muffel aufweist und die Dentalrestaurationsteile enthält. Dieser Mittelteil kann auch als Muffelkern bezeichnet werden.

Anstelle eines Zerteilwerkzeugs kann auch kurzerhand Pressluft, also unter Druck stehende Luft eingeleitet werden. Die durch die Formteile gebildeten Schwachstellen werden so ausgenutzt, und die Muffel bricht unter Belassung des Muffelkerns.

Die zugeleitete Druckluft hat zudem eine zusätzliche Kühlfunktion.

Es ist auch möglich, die Druckluft vor dem Trennen an den Sollbruchstellen zur Kühlung einzusetzen, denn durch die nach außen freilegenden Schlitze ist auch eine Kühlung an tiefliegenden Bereichen der Muffel möglich.

Nachdem auch der Muffelkern noch etwas abgekühlt ist, beispielsweise auf 250° C, wird er in an sich bekannter Weise sandgestrahlt. Nachdem nicht mehr die ganze Muffel, sondern nur noch etwas weniger als die Hälfte der Einbettmasse am Muffelkern entfernt werden muss, ist hier der Sandverbrauch und die Zeit für das Ausbetten deutlich geringer.

### Anstelle des Sandstrahlens ist auch Wasserstrahlen möglich

Überraschend ist die Festigkeit der Muffel, also der ausgehärteten Einbettmasse, gegen den Pressdruck auch bei der ersten Ausführungsform nicht oder nicht nennenswert vermindert. Dies liegt an den Durchbrechungen der Formteile, die eine feste Materialverbindung erlauben, beispielsweise zwischen dem Muffelkern und den oberen und unteren Teilen der Muffel.

Die durch die Formteile oder Vorsprünge in der Muffel erzeugten Formteile oder Vorsprünge bzw. die Vertiefungen oder Formhohlräume können in beliebiger geeigneter Weise ausgebildet sein.

Grundgedanke ist, die Muffelstruktur im Hinblick auf den Gesichtspunkt "Trennen" zu schwächen, also ein Aufteilen der Muffel in mehrere einzelne Teile zu ermöglichen. Gleichermaßen wichtig ist es jedoch, dass die Formhohlräume oder Vertiefungen auch bei der ersten Ausführungsform die Stabilität der Muffel in radialer Richtung - von den Dentalrestaurationsteilen ausgehend betrachtet - nicht schwächen.

Die Muffel muss und soll in gleicher Weise formstabil sein, wie eine Muffel, die ohne entsprechende Formhohlräume in klassischer Weise gemäß dem Stand der Technik vorgesehen ist.

Der Schwerpunkt der Anordnung der Formteile und Formhohlräume ist bevorzugt ein Bereich zwischen der Unterseite der Muffel, also der Seite, an der der Muffelfuß angebracht ist, und dem Bereich der Dentalrestaurationsteile. Dort ist - bevorzugt den Dentalrestaurationsteilen näher benachbart als den Muffelfuss - eine erste Sollbruchstelle vorgesehen. Bevorzugt ist zwischen der Ebene der Dentalrestaurationsteile und der Oberseite der Muffel eine weitere Sollbruchstelle vorgesehen.

Es ist bevorzugt, dass mindestens ein Dentalrestaurationsteil oder eine Mehrzahl von Dentalrestaurationsteilen über die Höhe der Muffel betrachtet von einem unteren Ende der Muffel und ebenfalls von einem oberen Ende der Muffel entfernt angeordnet ist bzw. sind, und dass je mindestens ein Formteil oder Vorsprung, bezogen auf die Höhe der Muffel, oberhalb und unterhalb des oder der Dentalrestaurationsteile ausgebildet ist.

Die Fornteile und ggf. die Formhohlräume sind bevorzugt durch eine Scheibe mit Durchbrechungen gebildet, wobei es sich versteht, dass eine derartige, im wesentlichen plane, Form nicht zwingend ist.

Alternativ kann die Scheibe, die das Formteil bzw. den Vorsprung ausbildet, sich in dreidimensionaler Struktur, also gewölbt, durch die Muffel hindurch erstrecken.

Die Durchbrechungen der Scheibe oder des sonstigen Formteils ermöglichen zum einem das Aussteifen der Muffel gegen den Pressdruck, zum anderen das leichte Einströmen der Vergussmasse in den Bereich unterhalb der Scheibe.

Anstelle einer planen oder geraden Scheibe ist es beispielsweise auch möglich, eine paraboloidisch gestaltete Scheibe zu realisieren, deren Brennpunkt dann benachbart die Dentalrestaurationsteile angeordnet sein können.

Vorteilhaft ist es, wenn die Scheiben und/oder die diese umfassenden Formteile oder Vorsprünge, insbesondere vor dem Vergießen zur Bereitstellung der Muffel mittels Vergussmasse, hinsichtlich ihrer Höhe abgestützt gelagert sind, entweder an der Muffelform oder einem Muffeldeckel .

Ferner ist es in vorteilhafter Ausgestaltung vorgesehen, dass das obere Formteil oberhalb und untere Formteil unterhalb der Ebene der Dentalrestaurationsteile ausgebildet ist. In vorteilhafter Ausgestaltung der Erfindung ist es vorgesehen, dass äußere Bereiche der Formteile eine geringere Festigkeit der Muffel an dieser Stelle bewirken, und damit eine größere Neigung, zu brechen. Beispielsweise kann der Rand des Formteils die Mantelfläche der Muffel vollständig unterbrechen.

Hingegen ist es bevorzugt, dass um den Presskanal herum eine gewisse Menge an Einbettmasse zusammenhängend vorgesehen ist, um den in Presskanal bestehenden Druck sicher aufzufangen.

Die zwischen den Durchbrechungen vorgesehenen Bereiche bildeten Stege, die den Pressdruck sicher nach außen weiterleiten.

Die erfindungsgemäßen Formteile könne in beliebiger geeigneter Weise muffelspezifisch hergestellt werden. Beispielsweise können sie per Spritzguss erstellt werden, oder aber auch über einen 3D-Drucker. Es ist auch möglich, die Formteile angepasst an die zu erstellenden Dentalrestaurationsteile bereitzustellen, nachdem die Form dieser ebenfalls typischerweise digital vorliegt.

Das für die Formteile zu verwendende ausbrennbare Material kann das Gleiche wie das für die Dentalrestaurationsteile sein. Es ist aber auch möglich, ein preisgünstigeres Material zu verwenden, nachdem die Formtreue der Formteile weniger relevant ist als bei den Dentalrestaurationsteilen.

Weitere Vorteile, Einzelheiten und Merkmale ergeben sich aus der nachfolgenden Beschreibung mehrere Ausführungsbeispiele der Erfindung anhand der Zeichnung.

Es zeigen:
- Fig. 1: eine perspektivische Darstellung einer erfindungsgemäßen dentalen Muffel zur Verwendung in einem erfindungsgemäßen dentalen Ausbettverfahren, in einer ersten Ausführungsform;
- Fig. 1a: eine Draufsicht auf eine mögliche Ausführungsform eines Formteils zur Verwendung bei dem dentalen Ausbettverfahren gemäß der Erfindung;
- Fig. 1b: eine weitere Ausführungsform eines Formteils zur Verwendung bei dem erfindungsgemäßen Ausbettverfahren;
- Fig. 2: eine schematische Darstellung einer erfindungsgemäßen dentalen Muffel in Seitenansicht in einer weiteren Ausführungsform;
- Fig. 3: eine schematische Darstellung einer erfindungsgemäßen dentalen Muffel in Seitenansicht in einer weiteren Ausführungsform;
- Fig. 4: eine schematische Darstellung einer erfindungsgemäßen dentalen Muffel in Seitenansicht in einer weiteren Ausführungsform;
- Fig. 5: eine schematische Darstellung einer erfindungsgemäßen dentalen Muffel in Seitenansicht in einer weiteren Ausführungsform;
- Fig. 6: eine schematische Darstellung einer erfindungsgemäßen dentalen Muffel in Seitenansicht in einer weiteren Ausführungsform;
- Fig. 7: eine schematische Darstellung einer erfindungsgemäßen dentalen Muffel in Seitenansicht in einer weiteren Ausführungsform;
- Fig. 8: eine schematische Darstellung eines Teils der dentalen Muffel, in der zweiten Ausführungsform gemäß Anspruch 2; und
- Fig. 9: eine schematische Darstellung desselben Teils der Muffel, jedoch in der ersten Ausführungsform gemäß Anspruch 1.

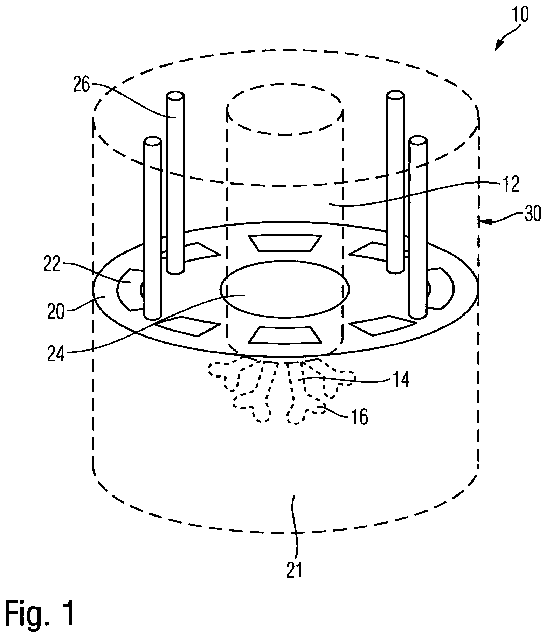

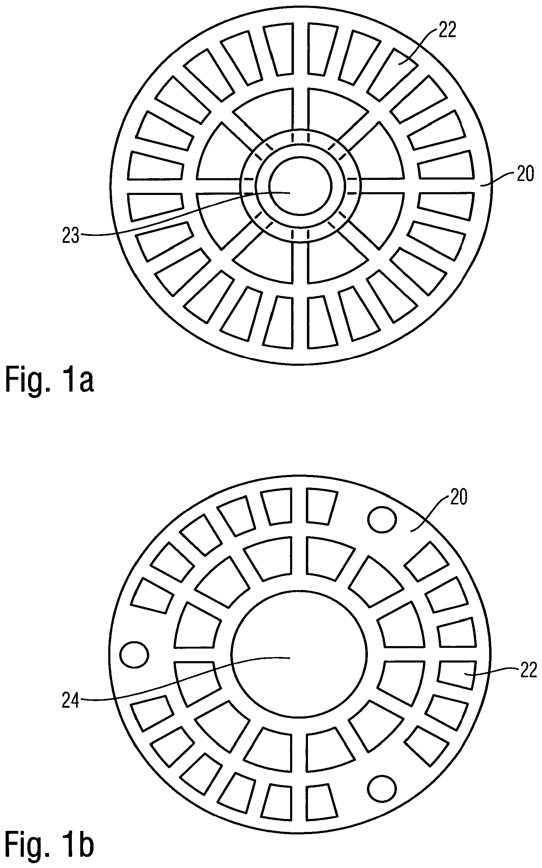

In Fig. 1 ist eine dentale Muffel 10 gestrichelt dargestellt. In Fig. 1 ist die Muffel 10 in der Pressposition dargestellt, in der ihre eigentliche Unterseite sich oben befindet. In der Ausgangsposition, also der Gießposition, steht die Muffel 10 gegenüber der Darstellung gemäß Fig. 1 auf dem Kopf.

Es ist in an sich bekannter Weise ein gestrichelt dargestellter Presskanal 12 vorgesehen, der über Anstiftkanäle 14 mit Formteilen für Dentalrestaurationsteile 16 verbunden ist.

Die Dentalrestaurationsteile 16 erstrecken sich kranzförmig radial außerhalb des Presskanals 12, in der Position der Muffel 10 gemäß Fig. 1 schräg unterhalb des Presskanals 12.

Erfindungsgemäß ist ein Formteil 20 vorgesehen, das in die Muffel 10 eingelegt ist, bevor deren Einbett- oder Vergussmasse 21 erstarrt. Das Formteil 20 ist im dargestellten Ausführungsbeispiel im wesentlichen scheibenförmig, wobei es jedenfalls eine Vielzahl von Durchbrechungen 22 aufweist.

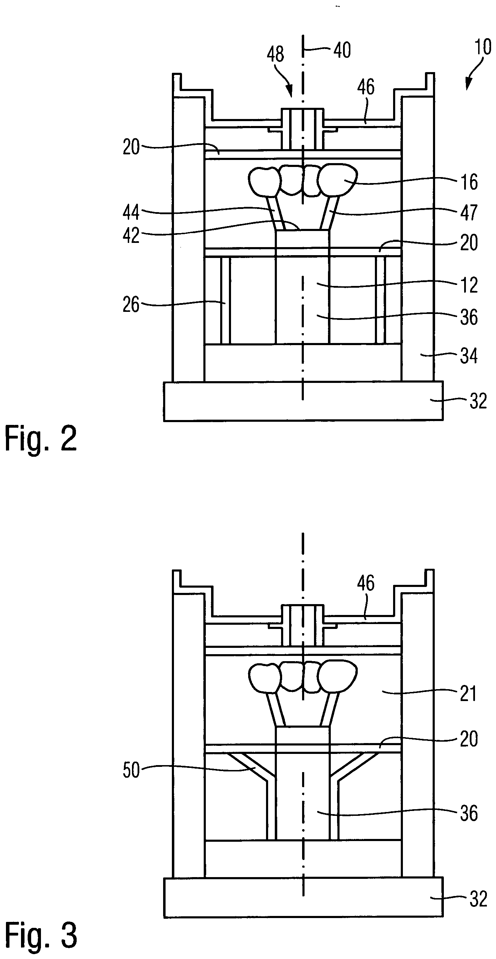

Die Durchbrechungen 22 erstrecken sich radial außerhalb einer Dorndurchbrechung 24. Diese dient der Aufnahme des Muffeldorns 36 (vergleiche zum Beispiel Fig. 2) und ist so groß, dass sie einen deutlichen Abstand zum Muffeldorn 36 hält.

Das Formteil 20 ist insofern eine Art Kreisringscheibe mit Durchbrechungen 22.

Das Formteil 20 erstreckt sich im wesentlichen auf halber Höhe der Muffel 10.

Die Höhenpositionierung ist im dargestellten Ausführungsbeispiel durch Füße 26 realisiert, die auf einem in Fig. 3 dargestellten Muffelfuß 32 abgestützt sind.

Die Länge der Füße 26 ist so gewählt, dass sich die Ringscheibe 20 knapp unterhalb - in der Darstellung gemäß Fig. 1 knapp oberhalb - der Dentalrestaurationsteile 16 befindet.

Das Formteil 20 erstreckt sich bis zur Mantelfläche 30 der Muffel 10.

Nach Aushärten der Muffel 10 wird die Muffel 10 ausgebrannt, also sämtliche in Wachs vorliegenden eingeschlossenen Bereiche werden ausgeschmolzen und entfernt. Dies gilt dementsprechend auch für das Formteil 20. Durch diese Ausgestaltung erstreckt sich in der Mantelfläche 30 der ausgehärteten Muffel 10 ein Schlitz 62, dessen Stärke der Dicke des Formteils 20 entspricht. Diese Stelle dient als Sollbruchstelle für das Teilen der Muffel 10.

Der Schlitz 62 ist kreisförmig und umlaufend, führt jedoch nicht dazu, dass die Muffel 10 in zwei Teile geteilt ist. Vielmehr ist sie nach wie vor einstückig, denn durch die Durchbrechungen 22 verläuft ebenfalls die Einbettmasse 21 der Muffel 10.

Insofern haben die Durchbrechungen 22 die Doppelfunktion, zum einen das Einströmen in den unteren Teil der Muffel 10 beim Eingießen der Vergussmasse 21 zu ermöglichen, zum anderen, den Zusammenhalt der Muffel 10 nach dem Vergießen zu erlauben.

Aus Fig. 1a ist ein Ausführungsbeispiel eines solchen Formteils 20 in der Draufsicht ersichtlich. Es ist eine Vielzahl von Durchbrechungen 22 vorgesehen. Hierzu gehört auch eine zentrale Durchbrechung 23.

Das Formteil 20 gemäß Fig. 1a ist dafür bestimmt, oberhalb der Dentalrestaurationsteile 16 eingelegt oder eingebracht zu werden. An dieser Stelle besteht der Presskanal 12 und der zugehörige Muffeldorn 36 nicht mehr, so dass die zentrale Durchbrechung 23 kleiner sein kann als dessen Durchmesser.

Aus Fig. 1b ist ein Formteil 20 ersichtlich, das an der Position gemäß Fig. 1 angeordnet sein kann. Auch hier sind eine Vielzahl von Durchbrechungen 22 vorgesehen, wobei eine Dorndurchbrechung 24 einen Durchmesser hat, der deutlich größer als der Presskanal 12 ist.

Aus Fig. 2 ist eine Ausführungsform einer erfindungsgemäßen dentalen Muffel 10 während des Einbettens ersichtlich. Ein Formteil 20 erstreckt sich im Bereich des Presskanals 12, also unterhalb der Dentalrestaurationsteile 16. Ein weiteres Formteil 20 erstreckt sich oberhalb dieser und kann beispielsweise gemäß Fig. 1a ausgebildet sein.

Die Muffel 10 ruht auf einem Muffelfuß 32. Diese ist flüssigkeitsdicht mit einem Muffelring 34 verbunden. Vom Muffelfuß 32 nach oben erstreckt sich ein Muffeldorn 36. Muffeldorn 36 und Muffelfuß 32 sind in an sich bekannter Weise einstückig zueinander und bestehen beispielsweise aus Silikon.

Von dem Muffelfuß 32 ragt der Muffeldorn 36 in der Achse 40 der Muffel 10 zentral empor und erstreckt sich ungefähr bis zur halben Höhe der Muffel 10 oder etwas darüber hinaus. Auf seiner Oberseite 42 kann in an sich bekannter Weise eine Stiftbasis aufgewachst sein. Alternativ erstrecken sich Anstiftkanäle 44 und 47 von dem Muffeldorn 36 ausgehend schräg nach radial auswärts und oben. Am anderen Ende der Anstiftkanäle 44 und 47 sind Dentalrestaurationsteile 16 angeordnet, beziehungsweise zunächst entsprechende Wachsformteile zur Ausbildung der Dentalrestaurationsteile 16.

Für die Herstellung der gegossenen Muffel 10 wird nun zunächst der Muffelfuß 32 aufgestellt und mit dem Muffelring 34 versehen. Auf dem Muffeldorn 36 befindet sich die Anordnung aus Dentalrestaurationsteilen 16, beziehungsweise deren Wachsmodelle.

Das Formteil 20 wird nun über die Dentalrestaurationsteile 16 gestülpt und auf den Füßen 26 abgestellt, so dass es sich scheibenförmig etwas unterhalb der Dentalrestaurationsteile 16 erstreckt.

Hierzu ist es erforderlich, dass die aus Fig. 2b ersichtliche Dorndurchbrechung 24 eine ausreichende Größe aufweist, um außerhalb der Dentalrestaurationsteile 16 zu passen.

Alternativ kann auch das Formteil 20 auf dem Muffelfuß 32 abgestellt werden, bevor die Dentalrestaurationsteile 16 aufgewachst werden.

Die hier dargestellte Muffel 12 weist einen Muffeldeckel 46 auf, der auf den Muffelring 34 passt. Der Muffeldeckel 46 weist eine Füllöffnung 48 auf, über die die Befüllung des Innenraums des Muffelrings 34 mit der flüssigen Einbettmasse 21 möglich ist.

Dort ist auch ein zweites Formteil 20, das ebenfalls scheibenförmig ist, hängend angebracht. Dieses obere Formteil 20 endet knapp oberhalb der Dentalrestaurationsteile 16.

Alternativ ist es auch möglich, dass das obere Formteil 20 mit zusätzlichen Füßen 26 auf dem Formteil 20 unterhalb der Dentalrestaurationsteile 16 abgestützt ist.

Wenn der Muffeldeckel 46 keine Füllöffnung 48 aufweist, ist es dennoch möglich, dass das obere Formteil 20 hängend vorzusehen. In diesem Fall wird die Muffel 10 befüllt, und der Deckel mit dem hängenden Formteil 20 aufgesetzt, während die Einbettmasse 21 noch flüssig ist.

Jedenfalls weist das obere Formteil 20 ebenfalls Durchbrechungen 22 auf und entspricht beispielsweise der Ausgestaltung gemäß Fig. 1a.

Weitere mögliche Modifikationen der erfindungsgemäßen Formteile 20, also des oberen Formteils 20 und des unteren Formteils 20 sind aus den Fig. 3 bis 7 ersichtlich.

Fig. 3 zeigt anstelle der Fuße 26 für das untere Formteil 20 eine Stützanordnung 50, die sich zentral an den Muffeldorn 36 anlehnt und sich von dort seitlich nach radial auswärts schräg nach oben erstreckt, um die Höhenlage des unteren Formteils 20 festzulegen.

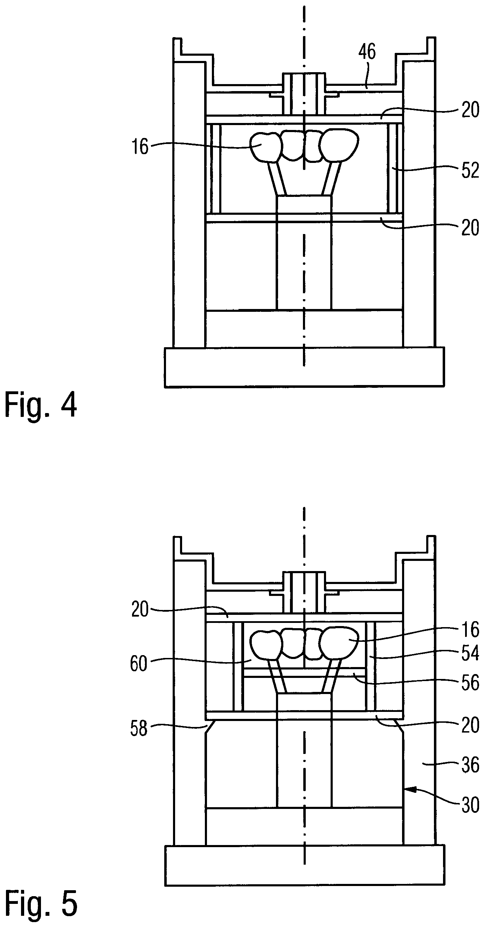

Fig. 4 zeigt eine Ausgestaltung, bei welcher der Muffeldeckel 46 sowohl das obere Formteil 20 als auch das untere Formteil 20 trägt. Hierzu sind anstelle von Füßen 26 Verbindungsstreben 52 vorgesehen, die den Abstand zwischen dem unteren und dem oberen Formteil fixieren.

Bei dieser Ausgestaltung sollte jedenfalls die zentrale Dorndurchbrechung 24 zu groß sein, dass sie über die Anordnung der Dentalrestaurationsteile 16 gestülpt werden kann.

Fig. 5 zeigt eine Anordnung von zusätzlichen Formteilen 54 und 56. Das Formteil 54 erstreckt sich wie eine Ringwand radial innerhalb des Muffelrings 36. Es weist zahlreiche Durchbrechungen auf.

Das Formteil 56 erstreckt sich radial innerhalb des Formteils 54 und zwischen den Dentalrestaurationsteilen 16 und dem unteren Formteil 20.

Bei der hier dargestellten Ausführungsform ist zudem das untere Formteil 20 an Vorsprüngen 58 abgestützt. Die Vorsprünge 58 erstrecken sich radial einwärts an dem Muffelring 36.

Während bei den Ausführungsformen der Muffel 10 gemäß der Fig. 2 bis 4 die Muffel 10 zunächst entlang des unteren Formteils 20 geteilt wird, und dann entlang des oberen Formteils 20, die nach Ausbrennen jeweils Sollbruchstellen bilden, ist bei der Ausführungsform gemäß Fig. 5 eine weitere Aufteilung möglich.

Auch hier werden wiederum zunächst die Sollbruchstellen entlang der Formteile 20 und 54 ausgenutzt. Der verbleibende mittlere Teil der Muffel 10 kann jedoch weiter geteilt werden, indem entlang der Schlitze 62 oder Sollbruchstellen entsprechend dem vom Teil 54 radial äußere Teile der Muffel 10 ebenfalls abgesprengt werden.

Es können sich auch dort Rippen zwischen dem Formteil 54 und dem Muffelring 36 radial nach außen erstrecken, so dass sich die entsprechend Teile nach der Art von Kuchenstücken leichter trennen lassen.

Zusätzlich kann eine weitere Teilung des nunmehr verbleibenden Muffelkerns entlang der Sollbruchstelle entsprechend dem Formteil 56 vorgenommen werden. Es verbleibt demnach lediglich ein Muffelkernstück 60, dass ausgesprochen kompakt ist und sich lediglich um weniges außerhalb der Dentalrestaurationsteile 16 erstreckt.

Nachdem sämtliche Formteile je Durchbrechungen 22 aufweisen, ist dennoch der dort bestehende Druck über Muffelmaterial bis zur Mantelfläche 30 der Muffel 10 abgestützt, so dass Muffelbrüche oder Muffelrisse nicht zu befürchten sind.

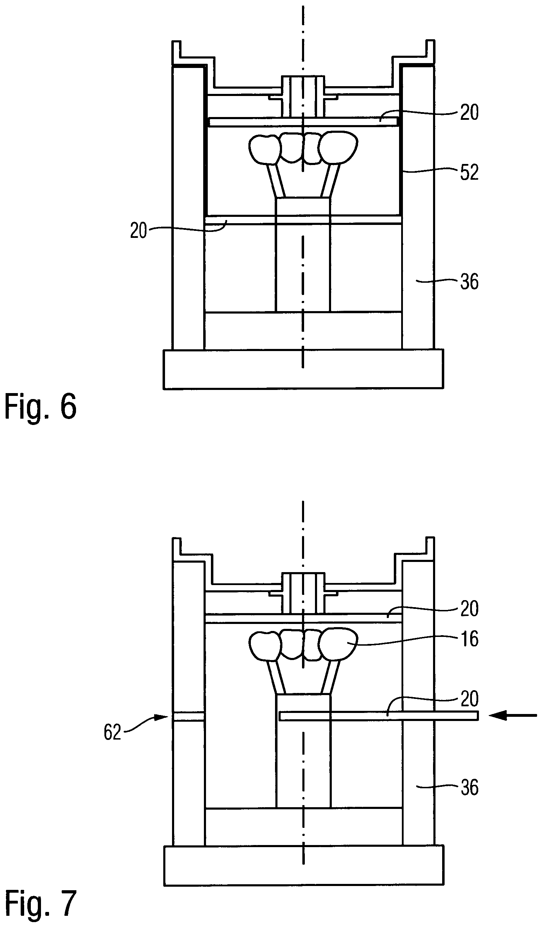

Bei der Ausführungsform gemäß Fig. 6 ist das untere Formteil 20 über Hängestreben 52 am oberen Rand des Muffelrings 36 abgestützt.

Bei der Ausführungsform gemäß Fig. 7 ist das obere Formteil 20 in bereits erläuterter Weise realisiert, während das untere Formteil 20 durch einen Schlitz 62 in dem Muffelring 36 seitlich auf der gewünschten Höhe eingeschoben wird. Es versteht sich, dass bei dieser Lösung die Dorndurchbrechung 24 U-förmig seitlich offen ist. Diese Ausführungsform erlaubt gewünschtenfalls eine vergleichsweise kleine Dornausnehmung, nachdem das untere Formteil 20 eingeschoben wird, wenn die Dentalrestaurationsteile 16 sich bereits an Ort und Stelle befinden.

Die Abstützung des Formteils 20 erfolgt im dem Schlitz 62 in dem Ring 36, wobei es sich versteht, dass bei Bedarf Abdichtmaßnahmen gegen austretende Einbettmasse 21 vorgenommen werden können.

Das dentale Ausbettverfahren, wie es in Anspruch 2 beansprucht ist und weiter vorne in der Beschreibung als zweite Ausführungsform bezeichnet ist, soll hier beschrieben werden.

Im Unterschied zu der Ausgestaltung gemäß Anspruch 1, die hier als "erste Ausführungsform" bezeichnet ist, ist bei dieser Ausgestaltung das Material der Formteile 20 oder Vorsprünge 58 nicht durch Ausbrühen oder Ausbrennen entfernbar. Beim Entfernen der wachsartigen Massen in den Formhohlräumen für die Dentalrestaurationensteile 16 verbleibt das Material der Formteile in der Muffel 10.

Die Ausgestaltung der Formteile 20 oder Vorsprünge 58 kann der Ausgestaltung gemäß den Fig. 1 bis 7 entsprechen und dementsprechend in beliebiger geeigneter Weise vorgesehen sein, um die erwünschte Sollbruchstelle 70 bereitzustellen.

Technische Grundlage für die Realisierung der Sollbruchstelle 70 über die nicht entfernbaren Formteile ist die Grenzschicht oder Grenzfläche 66 und 68 dieser zur Vergussmasse 21 der Muffel hin.

Die Formteile 20 bei dieser zweiten Ausführungsform sind ebenfalls in die Vergussmasse 21 eingebettet. Die phosphathaltige Vergussmasse 21 neigt dazu, bei porösen oder rauen Oberflächen in diese einzudringen und einen sicheren Verbund herzustellen.

Dieser Neigung wird erfindungsgemäß dadurch entgegengewirkt, dass die Formteile 20 oder Vorsprünge 58 glatt sind und dementsprechend eine ganz geringe Oberflächenrauigkeit weniger als Rₐ = 2 µm aufweisen.

Außerdem sind die Materialien der Formteile 20 einerseits und der Vergussmasse 21 andererseits gegeneinander dispers, vermischen sich also auch bei Wärmebehandlung nicht miteinander.

Der insofern an der Grenzfläche 66 und 68 bestehende Mikrospalt reicht aus, um die erwünschte Sollbruchstelle 70 zu bilden. Wird eine Lösekraft dort aufgebracht, trennt sich die Muffel 10 an der Grenzfläche 66 und 68 zum Formteil 20. Dies kann beispielsweise durch einen Brechvorgang realisiert sein, oder aber auch mittels eines Zerteilwerkzeugs wie eines Meißel, der außen an der Grenzfläche 66 und 68 angesetzt ist.

Es versteht sich, dass bei einem scheibenförmigen Formteil 20 dieses zwei Grenzflächen 66 und 68 hat, oder gegebenenfalls zusätzliche Grenzflächen 66 und 68, von denen eine nach oben weist und eine nach unten weist. Beide Grenzflächen 66 und 68 können als Sollbruchstelle 70 vorgesehen sein, wobei es im Grunde ausreicht, eine der Grenzflächen 66 und 68 glatt zu halten und dementsprechend als Sollbruchstelle 70 zu realisieren.

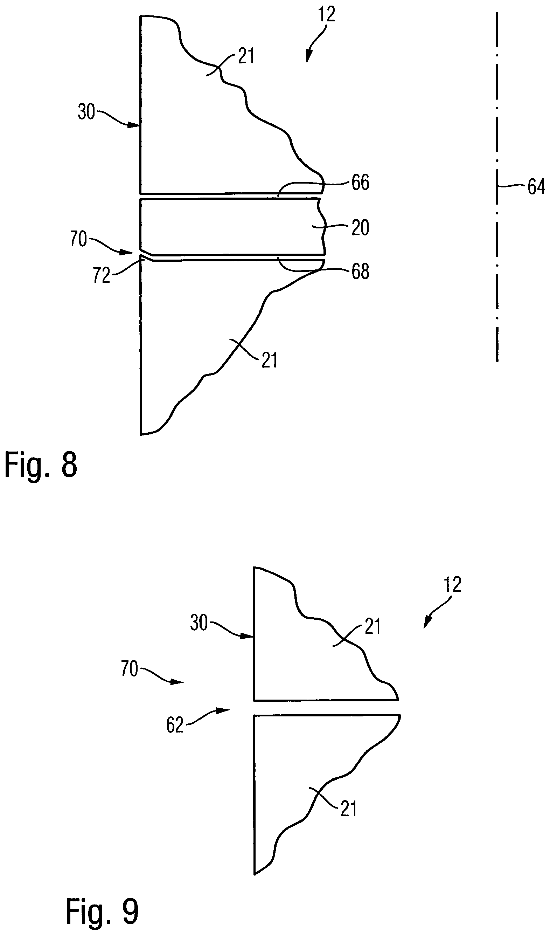

Eine mögliche Ausgestaltung eines Teils einer entsprechenden Muffel 10 gemäß dieser zweiten Ausführungsform ist in Fig. 8 dargestellt. Das Formteil 20 erstreckt sich in Scheibenform, von der ein radial äußerer Bereich dargestellt ist. Durchbrechungen 22 sind weiter radial innen vorgesehen, hier jedoch nicht dargestellt.

Bei der Ausführungsform gemäß Fig. 8, also der als solche bezeichneten zweiten Ausführungsformen, ist das Formteil 20 vergleichsweise dick. Es besteht aus Zirkondioxid und hat im Vergleich mit der phosphatgebundenen Einbettmasse eine deutlich höhere Wärmekapazität.

Diese Tatsache lässt sich erfindungsgemäß in besonderer Weise ausnutzen:
Beim ersten Abkühlen der heißen Muffel 10 wird an der Mantelfläche 30 der Muffel 10 zunächst die Muffel 10 vergleichsweise kalt und kühlt dann sowohl die Vergussmasse 21 als auch das Formteil 20 ab. Hierbei kühlt die Vergussmasse 21 jedoch schneller als das Formteil 20 ab, aufgrund Ihrer geringeren Wärmekapazität. Beispielsweise sei angenommen, dass die Vergussmasse 21 sich auf einer Temperatur befindet, die auf 600° C gefallen ist, während das Formteil 20 weiter radial einwärts noch eine Temperatur von 900° C habe.

In diesem Zustand ist das Volumen des Formteils 20 im Vergleich mit demjenigen der Formmasse größer als bei gleicher Temperatur dieser Teile. Daher wird an der Stelle des Formteils 20 gleichsam von innen ein axialer Druck entlang der Zylinderachse 64 der Muffel 10 ausgeübt. Die Vergussmasse 21 ist spröde und bricht daher an der Stelle des Formteils 20.

Es ist aber auch möglich, mit vergleichsweise dünnen Formteilen 20 aus einem wärmebeständigen Material zu arbeiten, und dennoch eine Sollbruchstelle 70 zu realisieren. Die Stärke kann bei dieser Ausführungsform beispielsweise entsprechend der des Schlitzes 62 aus Fig. 9 sein.

Bei dieser Ausführungsform reicht die axiale Kraft aufgrund der stärkeren Ausdehnung des Formteils 20 nicht für das Sprengen der Muffel 10 aus, da aufgrund der Wärmeleitung des Formteils 20 über die Grenzflächen 66 und 68 hinweg die Temperaturen sich angleichen.

Bei dieser Ausführungsform kommt die Glätte des Formteils 20 an den Grenzflächen 66 und 68 zur Muffelmasse 21 hin zur Geltung. Dort besteht ein Mikrospalt, der keinen Zusammenhalt gegen axiale Kräfte bietet.

Dies kann ausgenutzt werden, indem beispielsweise an der Sollbruchstelle 70, entsprechend am radial äußeren Ende der Grenzfläche 68, ein Zerteilwerkzeug angesetzt wird und die Muffel 10 so an dieser Stelle aufgesprengt wird.

Es ist auch möglich, das Formteil 20 dort, also z.B. an der unteren Grenzfläche 68 leicht konvex zu verrunden. Die Vergussmasse 21 bildet dann einen ringsumlaufenden zungenartigen Vorsprung 72 nach oben hin, der beispielsweise mit einem Messer oder Schraubenzieher leicht entfernbar ist, um das Zerteilwerkzeug besser ansetzen zu können.

Es versteht sich, dass hier beide Grenzflächen 66 und 68 als Sollbruchstellen 70 zur Verfügung stehen. Wenn kurzerhand eine Biegekraft auf die Muffel 10 aufgebracht wird, wird die Muffel 10 an der Stelle brechen, an welcher die Vergussmasse 21, die sich durch die nicht dargestellten Durchbrechungen 22 hindurch erstreckt, den geringeren Zusammenhalt hat.

Im Vergleich zu der hier so bezeichneten zweiten Ausführungsform ist die Realisierung einer Sollbruchstelle 70 bei der hier so bezeichneten ersten Ausführungsform in Fig. 9 dargestellt. Der Schlitz 62 ist durch ein entferntes Formteil 20 entstanden.

Die Sollbruchstelle 70 ist als Schlitz 62 deutlich sichtbar. Hier kann ein Zerteilwerkzeug angesetzt werden, oder es wird eine Biegekraft oder ein Torsionsmoment auf die Muffel 10 ausgeübt, um die den Zusammenhalt gewährleistende, sich durch die Durchbrechungen 22 erstreckende Vergussmasse 21 an dieser Stelle zu brechen.

## Patentansprüche

1. Dentales Ausbettverfahren, bei welchem ein Dentalrestaurationsteil aus einer ausgehärteten Muffel nach dem Vorbereiten der Muffel per Trennen oder Strahlen, insbesondere per Sandstrahlen, ausgebettet wird, **dadurch gekennzeichnet, dass** bei der Herstellung der Muffel (10), also vor dem Vergießen dieser mittels einer Vergussmasse (21), in oder an der Gießform Formteile (20) oder Vorsprünge (58) realisiert sind, die aus einem entfernbaren, insbesondere aus einem ausbrennbaren, Material bestehen, dass die Formteile (20) oder Vorsprünge (58) nach dem Aushärten der Muffel (10) entfernt werden, insbesondere ausgebrannt werden und dass die so entstehenden Vertiefungen oder Formhohlräume beim Ausbetten als Sollbruchstelle, die von dem Dentalrestaurationsteil (16) beabstandet ist, für die Muffel (10) ausgebildet und/oder verwendet werden.

2. Dentales Ausbettverfahren, bei welchem ein Dentalrestaurationsteil aus einer ausgehärteten Muffel nach dem Vorbereiten der Muffel per Trennen oder Strahlen, insbesondere per Sandstrahlen, ausgebettet wird, **dadurch gekennzeichnet, dass** bei der Herstellung der Muffel (10), also vor dem Vergießen dieser mittels einer Vergussmasse (21), in oder an der Gießform Formteile (20) oder Vorsprünge (58) realisiert sind, die aus einem von der Vergussmasse (21) verschiedenen Material bestehen und dass-Formteile (20) oder Vorsprünge (58) beim Ausbetten als Sollbruchstelle, die von dem Dentalrestaurationsteil (16) beabstandet ist, für die Muffel (10) ausgebildet und/oder verwendet werden.

3. Dentales Ausbettverfahren nach einem der vorhergehenden Ansprüche, **dadurch gekennzeichnet, dass** eine Markierung an der Muffel ausgebildet wird, insbesondere durch das Formteil (20), die sich radial außerhalb des Dentalrestaurationsteils (16) oder deren Dentalrestaurationsteile (16) erstreckt und außerhalb derer das Muffelmaterial durch Grobstrahlen zügig entfernt wird.

4. Dentales Ausbettverfahren nach einem der vorhergehenden Ansprüche, **dadurch gekennzeichnet, dass** die Muffel (10) nach dem Abkühlen auf eine Bearbeitungstemperatur unter Verwendung der Sollbruchstellen in mindestens zwei Teile gebrochen wird und lediglich der die Dentalrestaurationsteile (16) oder das Dentalrestaurationsteil (16) aufweisende Muffelkern (60) der Muffel (10) gestrahlt wird.

5. Dentales Ausbettverfahren nach einem der vorhergehenden Ansprüche, **dadurch gekennzeichnet, dass** eine Mehrzahl von rippenförmigen radialen Durchbrechungen (22) sich von einer gedachten Ringfläche außerhalb der Dentalrestaurationsteile (16) nach außen erstrecken und sowohl die Ringfläche als Sollbruchstelle als auch die Hohlräume oder die Grenzflächen zwischen Formteilen (2) und der Vergussmasse (21) als Sollbruchstelle ausgebildet werden und die radial außerhalb dieser sich erstreckenden Kuchenstücke nach Aushärten der Muffel (10) entfernt werden.

6. Dentales Ausbettverfahren nach einem der vorhergehenden Ansprüche, **dadurch gekennzeichnet, dass** ein wärmebeständiges Zerteilwerkzeug eingesetzt wird, insbesondere ein Sandstrahlgebläse, mit welchem die Muffel (10) entlang der als Sollbruchstelle wirkenden Vertiefung in heißem Zustand zerteilt wird und dass das das Dentalrestaurationsteil (16) aufweisende Teil der Muffel (10) weiter abgekühlt und/oder gestrahlt wird.

7. Dentales Ausbettverfahren nach einem der vorhergehenden Ansprüche, **dadurch gekennzeichnet, dass** die Befestigungsvorrichtung und/oder Stützstreben kraftschlüssig, formschlüssig oder reibschlüssig an einer Muffelform, einem Muffelboden oder einem Muffeldeckel (46) vor dem Vergießen der Vergussmasse (21) gelagert werden.

8. Dentales Ausbettverfahren nach einem der vorhergehenden Ansprüche, **dadurch gekennzeichnet, dass** das Formteil (20) vorgefertigt z.B. über Spritzgiessen od. dgl., oder mittels eines 3D-Druckers individuell hergestellt wird und insbesondere die Dentalrestaurationsteile (16) und Formteile aneinander angepasst hergestellt werden.

9. Dentale Muffel, mit einem Dentalrestaurationsteil, das in einer insbesondere runden Muffel in Vergussmasse (21) eingebettet ist, **dadurch gekennzeichnet, dass** von dem Dentalrestaurationsteil (16) beabstandet die Vergussmasse eine, insbesondere zwei, Sollbruchstellen aufweist, die durch Formteile oder Vorsprünge, die vor dem Vergießen der Muffel in oder an der Gießform realisiert sind, aus einem Material gebildet sind, das von der Vergussmasse (21) verschieden ist, oder durch Vertiefungen oder Formhohlräume, die Ihrerseits durch entfernte Formteile oder Vorsprünge ausgebildet sind.

10. Muffel nach Anspruch 9, **dadurch gekennzeichnet, dass** die Muffel (10) zylindrisch ist und die bzw. alle Sollbruchstelle(n) außerhalb der Höhe des eingebetteten Dentalrestaurationsteils (16), entlang der Zylinderachse der Muffel betrachtet, angeordnet ist bzw. sind.

11. Muffel nach einem der Ansprüche 9 oder 10, **dadurch gekennzeichnet, dass** jedes bzw. jeder eine Sollbruchstelle vorbereitende Formteil (20) oder Vorsprung (58) Teil eines horizontalen Formteils (20) mit Durchbrechungen (22) ist, welches Formteil (20) sich quer durch die Muffel (10) erstreckt.

12. Muffel nach einem der Ansprüche 9 bis 11, **dadurch gekennzeichnet, dass** mindestens eine Scheibe, die das Formteil (20) bzw. den Vorsprung (58) ausbildet, sich im Wesentlichen plan, also in Durchmesserrichtung der Muffel (10), durch diese hindurch erstreckt.

13. Muffel nach einem der Ansprüche 9 bis 12, **dadurch gekennzeichnet, dass** Stützstreben sich an einem Formteil (20) verankert sind oder sich einstückig von mindestens einem Formteil (20) weg erstrecken, welche Stützstreben insbesondere auf einem Muffelboden gelagert sind.

14. Muffel nach einem der Ansprüche 9 bis 13, **dadurch gekennzeichnet, dass** die Durchbrechungen der insbesondere scheibenförmigen Formteile (20) mindestens 10 % der Fläche und mindestens 90 % der Fläche, insbesondere zwischen 20 % und 80 % und besonders bevorzugt zwischen 30 % und 70 % der Fläche, je der Formteile (20), einnehmen.

15. Muffel nach einem der Ansprüche 9 bis 14, **dadurch gekennzeichnet, dass** mindestens ein Befestigungselement für ein erstes Formteil (20) einstückig mit dieser ausgebildet ist, mit welchem das Formteil (20) an einer Muffelform oder einem Muffeldeckel (46) abstützbar ist.

## Claims

1. A dental divestment method in which a dental restoration part is divested from a cured muffle after preparation of the muffle by parting or blasting, in particular by sandblasting, **characterized in that** in the production of the muffle (10), that is to say before it is cast by means of a casting compound (21), moldings (20) or protrusions (58) are realized in or at the casting mold which consist of a removable, in particular of a burn-out material, **in that** the moldings (20) or protrusions (58) are removed, in particular burnt out, after the muffle (10) has cured, and **in that** the indentations or mold cavities produced in this way are configured and/or used as a predetermined breaking point, which is spaced apart from the dental restoration part (16), for the muffle (10) during divestment.

2. A dental divestment method in which a dental restoration part is divested from a cured muffle after preparation of the muffle by parting or blasting, in particular by sandblasting, **characterized in that** in the production of the muffle (10), that is to say before it is cast by means of a casting compound (21), moldings (20) or protrusions (58) are realized in or at the casting mold which consist of material which differs from the casting compound (21), and **in that** moldings (20) or protrusions (58) are configured and/or used as a predetermined breaking point, which is spaced apart from the dental restoration part (16), for the muffle (10) during divestment.

3. The dental divestment method as claimed in any of the preceding claims, **characterized in that** a mark is configured at the muffle, in particular by the molding (20), said mark extending radially outside of the one or more dental restoration parts (16) and outside of which the muffle material is removed quickly by rough blasting.

4. The dental divestment method as claimed in any of the preceding claims, **characterized in that** the muffle (10) is broken into at least two parts using the predetermined breaking points after it is cooled to a processing temperature and only the muffle core (60) of the muffle (10) comprising the one or more dental restoration parts (16) is blasted.

5. The dental divestment method as claimed in any of the preceding claims, **characterized in that** a plurality of rib-shaped radial apertures (22) extend from an imaginary ring surface outside of the dental restoration parts (16) to the outside and that both the ring surface and the cavities or the boundaries between moldings (20) and the casting compound (21) are configured as a predetermined breaking point, and that the pieces of cake extending radially outside relative thereto are removed after the muffle (10) is cured.

6. The dental divestment method as claimed in any of the preceding claims, **characterized in that** a heat-resistant cutting tool is used, in particular a sandblaster, with which the muffle (10) is cut in the hot state along the indentation which acts as the predetermined breaking point, and **in that** the part of the muffle (10) comprising the dental restoration part (16) is further cooled and/or blasted.

7. The dental divestment method as claimed in any of the preceding claims, **characterized in that** the fastening device and/or support struts are mounted to a muffle mold, a muffle bottom or a muffle lid (46) non-positively, positively or frictionally before the casting compound (21) is cast.

8. The dental divestment method as claimed in any of the preceding claims, **characterized in that** the molding (20) is produced in a prefabricated manner, e.g. by injection molding or the like, or individually by means of a 3D printer, and that in particular the dental restoration parts (16) and the moldings are produced so as to match one another.

9. A dental muffle comprising a dental restoration part which is invested in casting compound (21) in a particularly round muffle, **characterized in that** the casting compound comprises one, in particular two, predetermined breaking points spaced apart from the dental restoration part (16), wherein said predetermined breaking points are formed by moldings or protrusions, which are realized in or at the casting mold before the muffle is cast, made of a material which is different from the casting compound (21), or by indentations or mold cavities which are configured in turn by removed moldings or protrusions.

10. The muffle as claimed in claim 9, **characterized in that** the muffle (10) is cylindrical and that the or all predetermined breaking point(s) is/are arranged outside the height of the invested dental restoration part (16) when viewed along the cylinder axis of the muffle.

11. The muffle as claimed in claim 9 or 10, **characterized in that** every molding (20) or protrusion (58) preparing a predetermined breaking point is part of a horizontal molding (20) having apertures (22), said molding (20) extending transversely through the muffle (10).

12. The muffle as claimed in any of the claims 9 to 11, **characterized in that** at least one disc which configures the molding (20) or the protrusion (58) extends substantially planar, that is to say in the direction of the diameter of the muffle (10), through the muffle.

13. The muffle as claimed in any of the claims 9 to 12, **characterized in that** support struts are anchored to a molding (20) or extend away from at least one molding (20) in one piece, said support struts mounted in particular on a muffle bottom.

14. The muffle as claimed in any of the claims 9 to 13, **characterized in that** the apertures of the in particular disc-shaped moldings (20) occupy at least 10% of the area and at least 90% of the area, in particular between 20% and 80% and particularly preferably between 30% and 70% of the area of the moldings (20), respectively.

15. The muffle as claimed in any of the claims 9 to 14, **characterized in that** at least one fastening element for a first molding (20) is configured in one piece with the first molding (20), with which the molding (20) may be supported on a muffle mold or a muffle lid (46).

## Revendications

1. Procédé de démoulage dentaire, dans lequel une pièce de restauration dentaire est démoulée à partir d'un moufle durci après la préparation du moufle par séparation ou par sablage, en particulier par sablage, **caractérisé en ce que**, lors de la fabrication du moufle (10), donc avant le coulage de celui-ci au moyen d'une masse de coulée (21), des pièces moulées (20) ou des saillies (58) sont réalisées dans ou sur le moule de coulée, qui sont constituées d'un matériau amovible, en particulier d'un matériau calcinable, **en ce que** les pièces moulées (20) ou les saillies (58) sont enlevées après le durcissement du moufle (10), en particulier sont calcinées, et **en ce que** les creux ou les cavités de moulage ainsi formés lors du démoulage sont réalisés et/ou utilisés pour le moufle (10) comme point de rupture prédéfini, qui est espacé de la pièce de restauration dentaire (16).

2. Procédé de démoulage dentaire dans lequel une pièce de restauration dentaire est démoulée à partir d'un moufle durci après la préparation du moufle par séparation ou par sablage, en particulier par sablage, **caractérisée en ce que** lors de la fabrication du moufle (10), c'est-à-dire avant le coulage de celui-ci au moyen d'une masse de coulée (21), pièce de restauration dentaire est démoulée à partir d'un moufle durci après la préparation du moufle par séparation ou par sablage, en particulier par sablage, **caractérisée en ce que** lors de la fabrication du moufle (10), c'est-à-dire avant le coulage de celui-ci au moyen d'une masse de coulée (21), des pièces moulées (20) ou des saillies (58) sont réalisées dans ou sur le moule de coulée, qui sont constituées d'un matériau différent de la masse de scellement (21), et **en ce que** des pièces moulées (20) ou des saillies (58) lors du démoulage sont réalisées et/ou utilisées pour le moufle (10) comme point de rupture prédéfini , qui est espacé de la pièce de restauration dentaire (16).

3. Procédé de démoulage dentaire selon l'une des revendications précédentes, **caractérisé en ce qu'**un repère est formé sur le moufle, en particulier par la pièce moulée (20), qui s'étend radialement à l'extérieur de la pièce de restauration dentaire (16) ou de ses pièces de restauration dentaire (16) et à l'extérieur duquel le matériau du moufle est rapidement éliminé par des jets grossiers.

4. Procédé de démoulage dentaire selon l'une des revendications précédentes, **caractérisé en ce que** le moufle (10), après avoir été refroidi à une température d'usinage, est brisé en au moins deux parties au moyen des points de rupture prédéfinis et **en ce que** seul le noyau (60) du moufle (10) présentant les pièces de restauration dentaire (16) ou la pièce de restauration dentaire (16) est sablé.

5. Procédé de démoulage dentaire selon l'une des revendications précédentes, **caractérisé en ce qu'**une pluralité de perforations radiales (22) en forme de nervures s'étendent vers l'extérieur à partir d'une surface annulaire imaginaire à l'extérieur des pièces de restauration dentaire (16) et **en ce qu'**aussi bien la surface annulaire que les cavités ou les interfaces entre les pièces moulées (2) et la masse de scellement (21) sont réalisées en tant que point de rupture prédéfini et **en ce que** les morceaux de gâteau s'étendant radialement à l'extérieur de ceux-ci sont retirés après durcissement du moufle (10).

6. Procédé de démoulage dentaire selon l'une des revendications précédentes, **caractérisé en ce qu'**un outil de découpe résistant à la chaleur est utilisé, en particulier une soufflerie de sablage, avec lequel le moufle (10) est découpé à l'état chaud le long du creux agissant comme point de rupture, et **en ce que** la partie du moufle (10) présentant la pièce de restauration dentaire (16) est encore refroidie et/ou sablée.

7. Procédé de revêtement dentaire selon l'une des revendications précédentes, **caractérisé en ce que** le dispositif de fixation et/ou les entretoises de support sont montées par adhérence, par complémentarité de forme ou par friction sur un moule de moufle, un fond de moufle ou un couvercle de moufle (46) avant le coulage de la masse de coulée (21).

8. Procédé de revêtement dentaire selon l'une des revendications précédentes, **caractérisé en ce que** la pièce moulée (20) est préfabriquée, par exemple par moulage par injection ou similaire, ou fabriquée individuellement au moyen d'une imprimante 3D, et en particulier les pièces de restauration dentaire (16) et les pièces moulées sont fabriquées en étant adaptées les unes aux autres.

9. Moufle dentaire, avec une pièce de restauration dentaire, qui est encastrée dans un moufle, en particulier un moufle rond, dans une masse de scellement (21), **caractérisé en ce que** la masse de scellement présente, à distance de la pièce de restauration dentaire (16), un, en particulier deux, points de rupture prédéfinis, qui sont formés par des pièces moulées ou des saillies qui sont réalisées dans ou sur le moule avant la coulée du moufle, dans un matériau qui est différent de la masse de scellement (21), ou par des creux ou des cavités de moule qui sont formés à leur tour par des pièces moulées ou des saillies retirées.

10. Moufle selon la revendication 9, **caractérisé en ce que** le moufle (10) est cylindrique et **en ce que** le ou tous les points de rupture sont situés à l'extérieur de la hauteur de la pièce de restauration dentaire encastrée (16), vu le long de l'axe cylindrique du moufle.

11. Moufle selon l'une des revendications 9 ou 10, **caractérisé en ce que** chaque pièce moulée (20) ou saillie (58) préparant un point de rupture prédéfini fait partie d'une pièce moulée horizontale (20) avec des perforations (22), laquelle pièce moulée (20) s'étend transversalement à travers le moufle (10).

12. Moufle selon l'une des revendications 9 à 11, **caractérisé en ce qu'**au moins un disque formant la pièce moulée (20) ou la saillie (58) s'étend sensiblement à plat, c'est-à-dire dans la direction du diamètre du moufle (10), à travers celui-ci.

13. Moufle selon l'une des revendications 9 à 12, **caractérisé en ce que** des entretoises de soutien sont ancrées à une pièce moulée (20) ou s'étendent d'un seul tenant en s'éloignant d'au moins une pièce moulée (20), lesquelles entretoises de soutien sont notamment montées sur un fond de moufle.

14. Moufle selon l'une des revendications 9 à 13, **caractérisé en ce que** les ajours des pièces moulées (20), notamment en forme de disque, occupent au moins 10 % de la surface et au moins 90 % de la surface, notamment entre 20 % et 80 et de manière particulièrement préférée entre 30 % et 70 % de la surface, pour chacune des pièces moulées (20).

15. Moufle selon l'une des revendications 9 à 14, **caractérisé en ce qu'**au moins un élément de fixation pour une première pièce moulée (20) est formé d'une seule pièce avec celle-ci, avec lequel la pièce moulée (20) peut être soutenue sur un moule de moufle ou un couvercle de moufle (46).
